(19) Europäisches Patentamt European Patent Office Office européen des brevets

(11) **EP 3 495 165 B1**

(12) **EUROPEAN PATENT SPECIFICATION**

(45) Date of publication and mention of the grant of the patent:
**17.06.2020 Bulletin 2020/25**

(51) Int Cl.:
***B60C 9/00*** *(2006.01)*      ***D07B 1/06*** *(2006.01)*
***B60C 9/20*** *(2006.01)*

(21) Application number: **17836861.9**

(86) International application number:
**PCT/JP2017/027338**

(22) Date of filing: **27.07.2017**

(87) International publication number:
**WO 2018/025755 (08.02.2018 Gazette 2018/06)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2016 JP 2016154985**

(43) Date of publication of application:
**12.06.2019 Bulletin 2019/24**

(73) Proprietor: **Bridgestone Corporation Tokyo 104-8340 (JP)**

(72) Inventor: **MORI Yuriko Tokyo 104-8340 (JP)**

(74) Representative: **Oxley, Robin John George Marks & Clerk LLP 15 Fetter Lane London EC4A 1BW (GB)**

(56) References cited:
| | |
|---|---|
| EP-A- 0 399 795 | EP-A1- 0 372 959 |
| EP-A1- 0 382 273 | EP-A1- 0 501 720 |
| EP-A1- 1 688 274 | EP-A1- 2 845 749 |
| JP-A- H0 827 684 | JP-A- H1 181 166 |
| JP-A- H02 154 086 | JP-A- H02 306 801 |
| JP-A- H04 193 605 | JP-A- H04 193 605 |
| JP-A- H11 278 012 | JP-A- H11 314 503 |
| JP-A- 2000 008 282 | JP-A- 2000 008 282 |
| JP-A- 2015 052 192 | JP-U- S61 206 695 |

**Description**

TECHNICAL FIELD

The present invention relates to a pneumatic tire (hereinafter, also simply referred to as "tire"), particularly a pneumatic tire in which the crack propagation resistance of crossing belt layers is improved without deterioration of the cutting resistance and the irregular wear resistance.

BACKGROUND ART

General dump truck tires running on rough ground on occasions are forced to run on road surfaces on which broken rocks are scattered. Thus, steel cords are widely used as reinforcing materials. Under such circumstances, as a steel cord for truck/bus tires that has excellent belt-end separation resistance and improves the tire durability and retreadability, for example, Patent Document 1 proposes a steel cord which includes a core composed of one to three steel filaments and six to nine steel filaments twisted together around the core and satisfies prescribed physical properties. Another pneumatic tire is known from EP0399795 A1. In said document steel cords having a core composed of two steel filaments and a sheath composed of eight sheath steel filaments are used for two crossing belt layers of a belt composed of at least three belt layers.

RELATED ART DOCUMENT

PATENT DOCUMENT

[Patent Document 1] JPH02-306801A

SUMMARY OF THE INVENTION

PROBLEMS TO BE SOLVED BY THE INVENTION

As described above, since dump truck tires run on rough ground in many occasions, a cut failure of a belt is likely to occur, and it is conceivable that the cut directly causes tire failure, or infiltration of water through the cut causes corrosion of a steel cord, leading to a separation failure. Dump truck tires usually include a belt composed of plural belt layers on the tire radial-direction outer side of a carcass. However, once a cut damage reaches crossing belt layers, water infiltrates into steel cords constituting the crossing belt layers and causes corrosion inside the steel cords. This may result in detachment of the crossing belt layers. Thus, it is necessary to prevent infiltration of water into the steel cords by allowing a rubber to sufficiently permeate into the steel cords.

Moreover, when a crack is generated due to strain of a belt end, the crack may propagate to cause detachment of the crossing belt layers. In order to inhibit such crack propagation in the crossing belt layers, the steel cord to cord distance in the crossing belt layers is preferably wide; however, since the amount of steel in the crossing belt layers is small when the steel cord to cord distance is wide, the rigidity is reduced and irregular wear occurs as a result. In this manner, at present, it is difficult to achieve both crack propagation resistance in the crossing belt layers and irregular wear resistance.

In view of the above, an object of the present invention is to provide a pneumatic tire in which the crack propagation resistance of crossing belt layers is improved without deterioration of the cutting resistance and the irregular wear resistance.

MEANS FOR SOLVING THE PROBLEMS

The present inventor intensively studied to solve the above-described problems and consequently discovered that the above-described problems can be solved by using a steel cord having a prescribed structure and controlling crossing belt layers to have a prescribed steel cord amount, thereby completing the present invention.

That is, the pneumatic tire of the present invention is a pneumatic tire including a belt composed of at least three belt layers on the tire radial-direction outer side of a carcass, wherein at least three belt layers including two crossing belt layers that are inclined in the opposite directions across the tire equatorial plane, which pneumatic tire is characterized in that:

   a reinforcing material of the crossing belt layers is a steel cord which has a layer-twisted structure including a core composed of two core filaments and a sheath composed of eight sheath filaments that are twisted together around the core, and

a steel cord amount in the crossing belt layers, which is represented by the following Equation (1), is 23 to 49:

$$\text{Steel cord diameter (mm)} \times \text{Steel cord end count (steel cords/50 mm)} \quad (1).$$

It is noted here that the term "steel cord diameter" used herein means the diameter of a circumscribed circle of the subject steel cord.

In the tire of the present invention, it is preferred that an outermost belt layer among the above-described at least three belt layers have a steel cord amount of 37 to 49, and that the steel cord amount in the crossing belt layers be not greater than the steel cord amount in the outermost belt layer. In the tire of the present invention, it is also preferred that the steel cord amount in the outermost belt layer be 100 to 217% of the steel cord amount in the crossing belt layers. Further, in the tire of the present invention, it is preferred that a steel cord to cord distance G1 (mm) of the outermost belt layer and a steel cord to cord distance G2 (mm) of the crossing belt layers satisfy a relationship represented by the following Equation (2):

$$0.1 \leq G1 \leq G2 \leq 1.8 \quad (2).$$

Still further, in the tire of the present invention, it is preferred that the steel cord to cord distance G1 (mm) of the outermost belt layer and the steel cord to cord distance G2 (mm) of the crossing belt layers satisfy a relationship represented by the following Equation (3):

$$0.05 \leq G1/G2 < 1.0 \quad (3).$$

In the tire of the present invention, the two core filaments of the steel cord of the crossing belt layers are twisted together, the twisting direction of the core filaments and that of the sheath filaments be different. Preferably a diameter Dc of the core filaments and a diameter Ds of the sheath filaments satisfy a relationship represented by the following Equation (4):

$$0.90 \leq Ds/Dc \leq 1.10 \quad (4).$$

Yet still further, in the tire of the present invention, it is preferred that the diameter Dc of the core filaments and the diameter Ds of the sheath filaments be the same. Yet still further, in the tire of the present invention, it is preferred that the diameter Dc of the core filaments and the diameter Ds of the sheath filaments be both 0.30 to 0.55 mm. Yet still further, in the tire of the present invention, it is preferred that the twisting pitch of the core filaments be 5 to 15 mm. Yet still further, in the tire of the present invention, it is preferred that the twisting pitch of the sheath filaments be 9 to 30 mm.

EFFECTS OF THE INVENTION

According to the present invention, a pneumatic tire in which the crack propagation resistance of crossing belt layers is improved without deterioration of the cutting resistance and the irregular wear resistance can be provided.

BRIEF DESCRIPTION OF THE DRAWINGS

[FIG. 1] FIG. 1 is a widthwise cross-sectional view illustrating a pneumatic tire according to one preferred embodiment of the present invention.
[FIG. 2] FIG. 2 is a cross-sectional view illustrating a steel cord of crossing belt layers of a pneumatic tire according to one preferred embodiment of the present invention.
[FIG. 3A] FIG. 3A is a cross-sectional view illustrating a steel cord prior to a cut input of crossing belt layers of a pneumatic tire according to one preferred embodiment of the present invention.
[FIG. 3B] FIG. 3B is a cross-sectional view illustrating the steel cord when a cut input is made of the crossing belt layers of the pneumatic tire according to one preferred embodiment of the present invention.

[FIG. 4A] FIG. 4A is a cross-sectional view of a steel cord having a 1×3+8 structure prior to a cut input.
[FIG. 4B] FIG. 4B is a cross-sectional view of the steel cord having a 1×3+8 structure when a cut input is made.

MODE FOR CARRYING OUT THE INVENTION

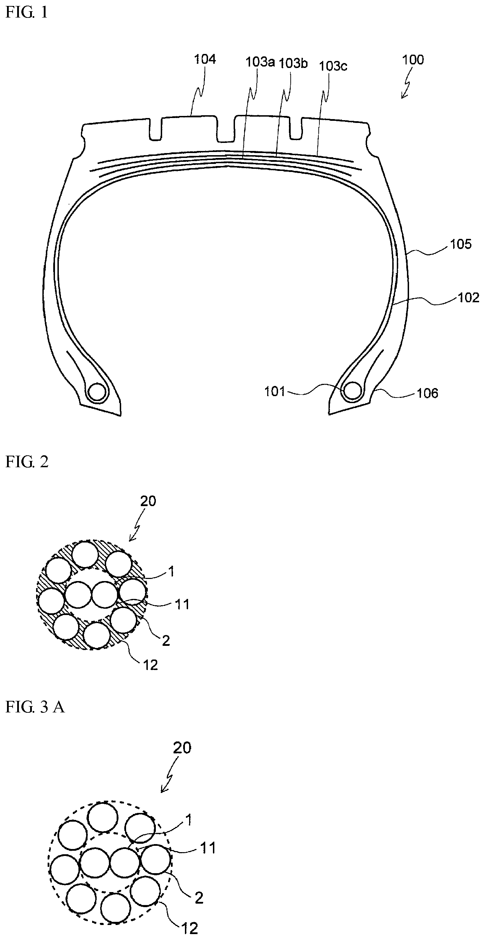

The pneumatic tire of the present invention will now be described in detail referring to the drawings. FIG. 1 is a widthwise cross-sectional view illustrating a pneumatic tire according to one preferred embodiment of the present invention. In the illustrated example, a tire 100 of the present invention includes: bead cores 101 arranged in a pair of left and right bead portions 106; and a tread portion 104 that is reinforced by a radial carcass 102, which extends from a crown portion to both bead portions 106 through side wall portions 105 and is wound around the bead cores 101 and thereby anchored to the respective bead portions 106, and a belt which is arranged on the crown portion tire radial-direction outer side of the radial carcass 102 and constituted by at least three belt layers 103a, 103b and 103c.

In the tire 100 of the present invention, at least three belt layers 103 include two crossing belt layers (belt layers 103a and 103b in the illustrated example) that are inclined in the opposite directions across the tire equatorial plane, and a reinforcing material of the crossing belt layers 103a and 103b is a steel cord which has a layer-twisted structure including a core composed of two core filaments and a sheath composed of eight sheath filaments that are twisted together around the core. The steel cord having such a layer-twisted structure has excellent corrosion resistance since a rubber favorably permeates into the steel cord and infiltration of water into the steel cord can thereby be inhibited. As a result, the corrosion resistance of the crossing belt layers can be improved. Meanwhile, when the number of the core filaments is three or greater, the rubber permeability into the core is deteriorated. Since this consequently causes strains to be concentrated to the rubber-infiltrated sheath filaments, the crack propagation resistance is deteriorated.

Further, in the tire 100 of the present invention, the steel cord amount in the crossing belt layers 103a and 103b among the at least three belt layers 103, which is represented by the following Equation (1), is 23 to 49:

$$\text{Steel cord diameter (mm)} \times \text{Steel cord end count (steel cords/50 mm) (1)}.$$

By setting the steel cord amount to be 23 to 49, the crack propagation resistance of the crossing belt layers 103a and 103b can be sufficiently improved while suppressing deterioration of the irregular wear resistance caused by variation in the rigidity of the crossing belt layers 103a and 103b. The steel cord amount in the crossing belt layers 103a and 103b is preferably 25 to 44, more preferably 32 to 36. In cases where a steel cord having a structure other than the above-described one is used, the crack propagation resistance is greatly deteriorated when the steel cord amount is in the above-described range; however, in the tire 100 of the present invention, because of the use of the specific steel cord, the wear resistance can be maintained without sacrificing other performances even when the steel cord amount in the crossing belt layers 103a and 103b is in the above-described range.

In the tire 100 of the present invention, the steel cord amount in the outermost belt layer 103c is preferably 37 to 49. In this manner, by controlling the steel cord amount in the outermost belt layer 103c to be 37 or greater, the resistance to penetration of a foreign matter can be improved. However, when the steel cord amount in the outermost belt layer 103c is large, a crack generated between steel cords readily propagates, which is not preferred from the durability standpoint. Therefore, by controlling the steel cord amount in the outermost belt layer 103c to be 49 or less, a crack propagation resistance is ensured in the outermost belt layer 103c. In order to favorably attain this effect, the steel cord amount in the outermost belt layer 103c is more preferably 37 to 44. It is noted here that, from the standpoint of the penetration resistance of the outermost belt layer 103c, the steel cord amount in the outermost belt layer 103c is preferably not less than the steel cord amount in the crossing belt layers 103a and 103b.

Specifically, in the tire 100 of the present invention, it is preferred that the steel cord amount in the outermost belt layer 103c be 100 to 217% of the steel cord amount in the crossing belt layers 103a and 103b. By satisfying this relationship, the resistance to penetration of a foreign matter and the crack propagation resistance of the outermost belt layer 103c can be improved in a well-balanced manner without deteriorating neither of them.

Further, in the tire 100 of the present invention, it is preferred that the steel cord to cord distance G1 (mm) of the outermost belt layer 103c and the steel cord to cord distance G2 (mm) of the crossing belt layers 103a and 103b satisfy a relationship represented by the following Equation (2):

$$0.1 \leq G1 \leq G2 \leq 1.8 \qquad (2).$$

By satisfying this relationship, the resistance to penetration of a foreign matter and the crack propagation resistance of the outermost belt layer 103c can be improved in a more balanced manner without deteriorating neither of them. Moreover, since G1 ≤ G2, the crack propagation resistance of the crossing belt layers is not deteriorated. The G1 and the G2 more preferably satisfy:

$$0.3 \leq G1 \leq G2 \leq 1.3 \qquad (5).$$

Still further, in the tire 100 of the present invention, it is preferred that the steel cord to cord distance G1 (mm) of the outermost belt layer 103c and the steel cord to cord distance G2 (mm) of the crossing belt layers 103a and 103b satisfy a relationship represented by the following Equation (3):

$$0.05 \leq G1/G2 < 1.0 \qquad (3).$$

By satisfying this relationship, the resistance to penetration of a foreign matter and the crack propagation resistance of the outermost belt layer 103c can be improved in an even more balanced manner. Likewise, as long as this relationship is satisfied, the crack propagation resistance of the crossing belt layers is not deteriorated. The G1 and the G2 satisfy more preferably:

$$0.2 \leq G1/G2 < 1.0 \qquad (6),$$

particularly preferably:

$$0.25 \leq G1/G2 < 0.75 \qquad (7).$$

FIG. 2 is a cross-sectional view illustrating a steel cord of crossing belt layers of the pneumatic tire according to one preferred embodiment of the present invention. In FIG 2, R represents the diameter of the steel cord. As illustrated, a steel cord 20 of the crossing belt layers 103a and 103b in the tire 100 of the present invention has a layer-twisted structure including: a core 11 composed of two core filaments 1; and a sheath 12 composed of eight sheath filaments 2 that are twisted together around the core 11. In the steel cord 20 of the crossing belt layers 103a and 103b in the tire 100 of the present invention, the two core filaments 1 constituting the core 11 are twisted together. By adopting this constitution, the steel cord 20 has superior cutting resistance as compared to a conventional steel cord in which three core filaments are twisted together. The reasons for this are described below.

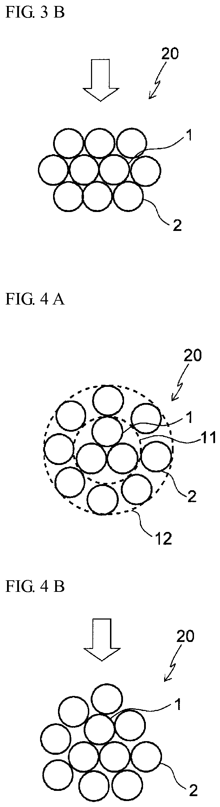

FIG. 3A is a cross-sectional view illustrating a steel cord prior to a cut input of crossing belt layers of a pneumatic tire according to one preferred embodiment of the present invention. FIG. 3B is a cross-sectional view illustrating the steel cord when a cut input is made of the crossing belt layers of the pneumatic tire according to one preferred embodiment of the present invention. FIG. 4A is a cross-sectional view of a steel cord having a 1×3+8 structure prior to a cut input. FIG. 4B is a cross-sectional view of the steel cord having a 1×3+8 structure when a cut input is made. In the steel cords 20 having the respective cross-sections illustrated in FIGS. 3A and 4A, when a cut is input, the positions of the core filaments 1 and the sheath filaments 2 are changed as illustrated in FIGS. 3B and 4B, respectively. It is noted here that the arrows in FIGS. 3B and 4B each represent the direction of the cut input.

Comparing FIGS. 3B and 4B, since the steel cord 20 having the core 11 composed of two core filaments 1 that are twisted together has large gaps in the core 11 as illustrated in FIG. 3B, the sheath filaments 2 sink into the gaps of the core 11 when a cut is input, so that the cross-section of the steel cord 20 can be deformed into a flat shape. Accordingly, the cut input can be mitigated, and a high shear load is thereby attained. On the other hand, in the steel cord 20 having the core 11 in which three core filaments 1 are twisted together as illustrated in FIG. 4B, since there is no gap which the sheath filaments 2 can sink into when a cut is input, the cross-section of the steel cord 20 cannot be deformed into a flat shape even with the cut input. Accordingly, the cut input cannot be mitigated, and the shear load is relatively small. Similarly, in those cases of steel cords having one or four core filaments, the core has no gap for the sheath filaments to sink into. Therefore, in the steel cord 20 of the present invention, the core 11 is formed by twisting together two core filaments 1. Further, in order to allow the sheath filaments 2 to sink smoothly, it is preferred to use filaments having straightness as the core filaments 1 and the sheath filaments 2.

In the steel cord 20 of the crossing belt layers 103a and 103b in the tire 100 of the present invention, the number of the sheath filaments 2 is 8. When the number of the sheath filaments 2 is less than 8, the shear load is reduced since the amount of steel per unit area of the steel cord 20 is small. Meanwhile, when the number of the sheath filaments 2 is greater than 8, since the gaps between the sheath filaments 2 are small, the steel cord 20 cannot collapse into a flat shape, so that the shear load is reduced likewise. In addition, the small gaps between the sheath filaments 2 make it difficult for a rubber to permeate thereinto, which is not preferred.

Further, in the steel cord 20 of the crossing belt layers 103a and 103b in the tire 100 of the present invention, the twisting direction of the core filaments is different from the twisting direction of the sheath filaments 2. This makes it easy for a rubber to infiltrate into the steel cord 20, and the corrosion resistance of the steel cord 20 is thereby improved. In addition, because of the difference in the twisting direction between the core filaments 1 and the sheath filaments 2, deformation of a calendered steel prepared by rubber-coating the steel cord 20 that is caused by cutting of the calendered steel can be suppressed, so that not only excellent processability in the production of the pneumatic tire 100 of the present invention but also an effect of inhibiting crack propagation against strains applied from various directions can be attained.

Still further, in the steel cord 20 of the crossing belt layers 103a and 103b in the tire 100 of the present invention, it is preferred that the diameter $Dc$ of the core filaments 1 and the diameter $Ds$ of the sheath filaments 2 satisfy a relationship represented by the following Equation (4):

$$0.90 \leq Ds/Dc \leq 1.10 \qquad (4).$$

With the value of $Ds/Dc$ satisfying this range, good rubber permeability into the steel cord 20 can be ensured, and sufficient cutting resistance and strength can be attained. In order to favorably attain this effect, the $Ds$ and the $Dc$ satisfy more preferably:

$$0.95 \leq Ds/Dc \leq 1.08 \qquad (8),$$

still more preferably:

$$1.00 \leq Ds/Dc \leq 1.05 \qquad (9),$$

and the $Ds$ and the $Dc$ are particularly preferably the same ($Ds = Dc$).

Yet still further, in the steel cord 20 of the crossing belt layers 103a and 103b in the tire 100 of the present invention, it is preferred that the diameter $Dc$ of the core filaments 1 and the diameter $Ds$ of the sheath filaments 2 be both 0.30 to 0.55 mm. By controlling the diameter of the core filaments 1 and that of the sheath filaments 2 to be in this range, good rubber permeability into the steel cord 20 can be ensured likewise, and sufficient cutting resistance and strength can be attained. In order to favorably attain this effect, the diameter $Dc$ and the diameter $Ds$ are preferably 0.30 to 0.46 mm, more preferably 0.37 to 0.43 mm.

Yet still further, in the steel cord 20 of the crossing belt layers 103a and 103b in the tire 100 of the present invention, it is preferred that the twisting pitch of the core filaments 1 be 5 to 15 mm. By controlling the twisting pitch of the core filaments 1 to be in this range, sufficient rubber permeability into the steel cord 20 can be attained. The twisting pitch of the core filaments 1 is more preferably 5 to 13 mm, still more preferably 7 to 9 mm.

Yet still further, in the steel cord 20 of the crossing belt layers 103a and 103b in the tire 100 of the present invention, it is preferred that the twisting pitch of the sheath filaments 2 be 9 to 30 mm. By controlling the twisting pitch of the sheath filaments 2 to be 9 mm or larger, the surface irregularities of the steel cord 20 can be reduced, as a result of which the adhesion between a rubber and the steel cord 20 is enhanced and the durability is thus improved. Meanwhile, when the twisting pitch of the sheath filaments 2 is large, spread of water along the sheath filaments 2 is accelerated. In order to inhibit this phenomenon, the twisting pitch of the sheath filaments 2 is preferably 30 mm or smaller, more preferably 9 to 26 mm, still more preferably 15 to 20 mm.

In the steel cord 20 of the crossing belt layers 103a and 103b in the tire 100 of the present invention, it is preferred that the sum $S2$ of the gap area $S1$ of the sheath 12 and the cross-sectional areas of the sheath filaments 2 satisfy a relationship represented by the following Equation (10):

$$40 \leq S1/S2 \times 100(\%) \leq 120 \qquad (10).$$

The "gap area $S1$" of the sheath 12 refers to the portion indicated with diagonal lines in FIG. 2. By controlling the value of $S1/S2 \times 100(\%)$ to be 40 or larger, the gap area of the sheath 12 can be sufficiently ensured, and the steel cord 20 is made more likely to deform into a flat shape when a cut is input. In addition, since the gaps in the sheath 12 are increased, excellent rubber permeability is attained, so that a separation failure caused by corrosion of the steel cord 20 due to infiltration of water through a cut damage can be favorably inhibited. Meanwhile, by controlling the value of S1/S2 $\times$ 100(%) to be 120 or smaller, a certain amount of steel in the sheath 12 is ensured, and sufficient cutting resistance as a reinforcing material can thus be ensured.

The gap area S1 of the sheath 12 can be determined by the following Equation (11):

$$S1 = (Dc + Ds)^2\pi - Dc^2\pi - Ds^2\pi \times N/4 \qquad (11),$$

where Dc: Diameter of core filaments,
Ds: Diameter of sheath filaments, and
N: Number of sheath filaments.

In the steel cord 20 of the crossing belt layers 103a and 103b in the tire 100 of the present invention, it is preferred that the gap area S1 of the sheath 12 be 0.30 mm$^2$ or larger. The effects of the present invention can be favorably obtained by adjusting the diameter of the core filaments 1 and that of the sheath filaments 2 such that the gap area S1 of the sheath 12 is 0.30 mm$^2$ or larger.

In the steel cord 20 of the crossing belt layers 103a and 103b in the tire 100 of the present invention, it is preferred that the strength F1 of the core filaments 1 and the strength F2 of the sheath filaments 2 satisfy a relationship represented by the following Equation (12):

$$F1/F2 \times 100 \geq 90 \ (\%) \qquad (12).$$

In the pneumatic tire 100, a strength is also demanded for belt layers. When the strength is insufficient, the pneumatic tire 100 cannot withstand an internal pressure and a load, and its burst durability is reduced. However, when thick steel filaments are used for improving the strength, the rubber permeability into the steel cord is deteriorated. Moreover, an increase in the strength of the steel filaments for the purpose of increasing the strength of the belt layers, the shear load is deteriorated. Therefore, in the steel cord 20 of the present invention, by satisfying the Equation (12), preferably by controlling the F1 and the F2 to be the same (F1 = F2), such problems are avoided and the strength of the steel cord 20 is improved. The strength F2 of the sheath filaments 2 is preferably 150 N or greater and, taking into consideration the shear load, the upper limit of the F1 and F2 is 580 N or less.

In the tire 100 of the present invention, it is important that the tire 100 include a belt composed of at least three belt layers 103; that a reinforcing material of at least the crossing belt layers among the at least three belt layers 103 be a steel cord having a 2+8 structure; and that the amount of the steel cord in the crossing belt layers satisfy the above-described range, and other features of the constitution can be designed as appropriate. For example, the structure of a steel cord in a belt layer other than the crossing belt layers of the tire 100 of the present invention, namely the outermost belt layer 103c in the illustrated example, is not particularly restricted. For example, a steel cord having a 1$\times$N structure (e.g., 1$\times$3 or 1$\times$5), a steel cord having an M+N bilayer structure (e.g., 1+3, 1+4, 1+5, 1+6, 2+2, 2+3, 2+4, 2+5, 2+6, 2+7, 3+6, 3+7, or 3+8), or a steel cord having an L+M+N (L = 1 to 4, M = 4 to 9, and N = 8 to 15) three-layer structure (e.g., a 3+9+15 structure) can be used. It is desirable to use a steel cord having the same 2+8 structure as the steel cord 20 used in the crossing belt layers of the tire 100 of the present invention. By using a cord having a 2+8 structure, when the steel cord amount in the outermost belt layer 103c is in the above-described range, the penetration resistance against a needle and the like that the tire may run over can be better improved without largely deteriorating various performances such as crack propagation resistance, as compared to a case where a belt composed of steel cords having other structure is used.

The material of the steel filaments used in the steel cords of the belt layers 103 of the tire 100 of the present invention is also not particularly restricted, and any conventionally used steel filaments can be used; however, the material is preferably a high-carbon steel containing not less than 0.80% by mass of a carbon component. By using a high-hardness high-carbon steel containing not less than 0.80% by mass of a carbon component as the material of the filaments, the effects of the present invention can be favorably attained. Meanwhile, a carbon component content of greater than 1.5% by mass is not preferred since the ductility is reduced and the fatigue resistance is thus deteriorated.

In the tire 100 of the present invention, a plating treatment may be performed on the surfaces of the steel cords of the belt layers 103. The composition of the plating to be applied to the surfaces of the steel cords is not particularly restricted; however, a brass plating composed of copper and zinc is preferred, and a brass plating having a copper content of not less than 60% by mass is more preferred. By the plating treatment, the adhesion between the steel filaments and a rubber can be improved.

In the tire 100 of the present invention, the details of the tire constitution, the materials of the respective members and the like are also not particularly restricted, and the tire 100 of the present invention can be configured by appropriately selecting a conventionally known structure, materials and the like. For example, a tread pattern is formed as appropriate on the surface of the tread portion 104, bead fillers (not illustrated) are arranged on the tire radial-direction outer side of the respective bead cores 101, and an inner liner is arranged as an innermost layer of the tire 100. Further, as a gas filled into the tire 100 of the present invention, air having normal or adjusted oxygen partial pressure, or an inert gas such as nitrogen, can be used. The tire of the present invention exhibits excellent crack propagation resistance of the crossing belt layers without deterioration of the irregular wear resistance; therefore, the tire of the present invention can be suitably applied to trucks and buses.

EXAMPLES

The present invention will now be described in more detail by way of examples thereof.

<Examples 1 to 19 and Comparative Examples 1 to 8>

Tires having a belt composed of four belt layers on the radial-direction outer side of a carcass were produced at a tire size of 11R22.5/14PR. In the crossing belt layers of these tires, the cord type A to G shown in Table 1 were used as steel cords, and the steel cords were arranged such that the major-axis direction was aligned with the belt width direction. A second belt layer and a third belt layer (the second layer and the third layer from the tire radial-direction inner side, respectively) had an angle of ± 20° with respect to the tire circumferential direction. The structures and the like of the steel cords of the respective outermost belt layers were as shown in Tables 2 to 6, and each outermost belt layer was arranged at an angle of 20° with respect to the tire circumferential direction. Further, in the first belt layer, the steel cord structure was 3+9+15×0.22+0.15, the belt angle was 50° with respect to the tire circumferential direction, and the end count was 20 steel cords/50 mm. For each of the thus obtained tires, the cutting resistance, crack propagation resistance and irregular wear resistance of the crossing belt layers were evaluated in accordance with the following procedures.

<Cutting Resistance>

A blade of 500 mm in width, 1.5 mm in thickness (bottom thickness = 5.0 mm) and 30 mm in height was gradually pressed against each tire to measure the force required for breaking a steel cord of the crossing belt layers, and the thus measured force was indicated as an index based on the value of Comparative Example 1. A larger value means superior cutting resistance, and a value of 100 or larger was regarded as satisfactory. The results thereof are also shown in Tables 2 to 6.

<Irregular Wear Resistance>

Each test tire was mounted on a rim having a size of 8.25 inches and subjected to a laboratory test using a rotary drum for tire wear test under the conditions of an internal air pressure of 700 kPa, an applied load of 26.7 kN and a test speed of 60 km/h. The wear amount of the center land portion positioned on the tire equatorial plane and the wear amount of the shoulder land portion were visually evaluated in a five-point scale, taking the value of Comparative Example 1 as 5. A larger value means superior irregular wear resistance, and a value of 4 or larger was regarded as satisfactory. The results thereof are also shown in Tables 2 to 6.

<Crack Propagation Resistance>

The thus produced tires were each mounted on a rim having a size of 8.25 inches and then subjected to a 300-hour drum running test at an air pressure of 700 kPa, a load of 26.7 kN and a speed of 60 km/h. After the completion of the drum running test, each tire was cut and disassembled, and the lengths of cracks generated in the crossing belt layers were measured and indicated as an index based on the value of Comparative Example 1. A larger value means superior crack propagation resistance, and a value of 1,000 or larger was regarded as satisfactory. The results thereof are also shown in Tables 2 to 6.

[Table 1]

| | | Cord type A | Cord type B | Cord type C | Cord type D | Cord type E | Cord type F | Cord type G |
|---|---|---|---|---|---|---|---|---|
| Core | Number of filaments | 2 | 2 | 2 | 4 | 3 | 2 | 2 |
| | Filament diameter Dc (mm) | 0.4 | 0.4 | 0.55 | 0.4 | 0.4 | 0.4 | 0.4 |
| | Filament strength F1 (N) | 346 | 346 | 568 | 346 | 346 | 346 | 346 |
| | Filament twisting direction | - | Z | Z | Z | Z | Z | Z |
| | Twisting pitch (mm) | - | 8 | 8 | 8 | 8 | 8 | 8 |
| Sheath | Number of filaments | 8 | 8 | 8 | 8 | 8 | 7 | 9 |
| | Filament diameter Ds (mm) | 0.4 | 0.4 | 0.55 | 0.4 | 0.4 | 0.4 | 0.4 |
| | Filament strength F2 (N) | 346 | 346 | 568 | 346 | 346 | 346 | 346 |
| | Filament twisting direction | S | S | S | S | S | S | S |
| | Twisting pitch (mm) | 17 | 17 | 17 | 17 | 17 | 17 | 17 |
| Core-sheath filament twisting direction | | - | different | different | different | different | different | different |
| Ds/Dc | | 1.0 | 1.0 | 1.0 | 1.0 | 1.0 | 1.0 | 1.0 |
| Sheath gap area, S1 (mm$^2$) | | 0.32 | 0.50 | 0.95 | 0.71 | 0.58 | 0.63 | 0.38 |
| Sum of sheath filament cross-sectional areas, S2 (mm$^2$) | | 1.01 | 1.01 | 1.90 | 1.01 | 1.01 | 0.88 | 1.13 |
| S1/S2 × 100(%) | | 31.8 | 50 | 50 | 70.7 | 57.7 | 71.4 | 33.3 |
| F1/F2 × 100(%) | | 100 | 100 | 100 | 100 | 100 | 100 | 100 |

[Table 2]

| | | | Comparative Example | Example 1 | Example 2 | Comparative Example 2 | Comparative Example 3 | Comparative Example 4 |
|---|---|---|---|---|---|---|---|---|
| Outermost belt layer | | Cord type | A | A | B | B | B | B |
| | | Cord diameter (mm) | 1.6 | 1.6 | 1.6 | 1.6 | 1.6 | 1.6 |
| | | Cord to cord distance, G1 (mm) | 1.53 | 1.53 | 0.32 | 0.32 | 0.32 | 0.32 |
| | | End count (cords/50 mm) | 16 | 16 | 26 | 26 | 26 | 26 |
| | | SC amount* in calendered steel | 26 | 26 | 42 | 42 | 42 | 42 |
| Crossing belt layers | | Cord type | 3+9+15 ×0.22+1 | B | B | D | E | A |
| | | Cord diameter (mm) | 1.35 | 1.6 | 1.6 | 1.77 | 1.66 | 1.6 |
| | | Cord to cord distance, G2 (mm) | 0.73 | 0.67 | 0.67 | 0.74 | 0.70 | 0.69 |
| | | End count (cords/50 mm) | 24 | 22 | 22 | 20 | 21 | 22 |
| | | SC amount* in calendered steel | 32 | 35 | 35 | 35 | 35 | 35 |
| SC amount in outermost layer/SC amount in crossing layers × 100(%) | | | 79 | 73 | 118 | 118 | 118 | 119 |
| G1/G2 | | | 2.08 | 2.27 | 0.48 | 0.44 | 0.46 | 0.47 |
| Cutting resistance (index) | | | 100 | 101 | 173 | 170 | 169 | 167 |
| Irregular wear resistance (index) | | | 5 | 5 | 5 | 5 | 5 | 5 |
| Crack propagation resistance of crossing belt layers (index) | | | 100 | 1,263 | 1,263 | 283 | 283 | 316 |
| *: steel cord amount | | | | | | | | |

[Table 3]

|  |  | Comparative Example 5 | Comparative Example 6 | Comparative Example 7 | Example 3 | Example 4 |
|---|---|---|---|---|---|---|
| Outermost belt layer | Cord type | B | B | B | B | B |
|  | Cord diameter (mm) | 1.6 | 1.6 | 1.6 | 1.6 | 1.6 |
|  | Cord to cord distance, G1 (mm) | 0.32 | 0.32 | 0.32 | 0.32 | 0.32 |
|  | End count (cords/ 50 mm) | 26 | 26 | 26 | 26 | 26 |
|  | SC amount* in calendered steel | 42 | 42 | 42 | 42 | 42 |
| Crossing belt layers | Cord type | F | G | B | B | B |
|  | Cord diameter (mm) | 1.60 | 1.60 | 1.6 | 1.6 | 1.6 |
|  | Cord to cord distance, G2 (mm) | 0.67 | 0.67 | 2.04 | 1.88 | 0.22 |
|  | End count (cords/ 50 mm) | 22 | 22 | 14 | 14 | 28 |
|  | SC amount* in calendered steel | 35 | 35 | 22 | 23 | 44 |
| SC amount in outermost layer/SC amount in crossing layers × 100(%) | | 118 | 118 | 189 | 181 | 95 |
| G1/G2 | | 0.48 | 0.48 | 0.16 | 0.17 | 1.48 |
| Cutting resistance (index) | | 168 | 173 | 162 | 163 | 181 |
| Irregular wear resistance (index) | | 5 | 5 | 3 | 4 | 5 |
| Crack propagation resistance of crossing belt layers (index) | | 893 | 283 | 1,297 | 1,293 | 1,252 |

[Table 4]

|  |  | Example 5 | Comparative Example 8 | Example 6 | Example 7 | Example 8 |
|---|---|---|---|---|---|---|
| Outermost belt layer | Cord type | B | B | B | B | B |
|  | Cord diameter (mm) | 1.6 | 1.6 | 1.6 | 1.6 | 1.6 |
|  | Cord to cord distance, G1 (mm) | 0.32 | 0.32 | 0.62 | 0.56 | 0.03 |
|  | End count (cords/50 mm) | 26 | 26 | 23 | 23 | 31 |
|  | SC amount* in calendered steel | 42 | 42 | 36 | 37 | 49 |

(continued)

|  |  | Example 5 | Comparative Example 8 | Example 6 | Example 7 | Example 8 |
|---|---|---|---|---|---|---|
| Crossing belt layers | Cord type | B | B | B | B | B |
|  | Cord diameter (mm) | 1.6 | 1.6 | 1.6 | 1.6 | 1.6 |
|  | Cord to cord distance, G2 (mm) | 0.03 | 0.00 | 0.67 | 0.67 | 0.67 |
|  | End count (cords/50 mm) | 31 | 31 | 22 | 22 | 22 |
|  | SC amount* in calendered steel | 49 | 50 | 35 | 35 | 35 |
| SC amount in outermost layer/SC amount in crossing layers $\times$ 100(%) | | 85 | 83 | 102 | 105 | 139 |
| G1/G2 | | 9.89 | - | 0.92 | 0.84 | 0.05 |
| Cutting resistance (index) | | 185 | 186 | 135 | 157 | 199 |
| Irregular wear resistance (index) | | 5 | 5 | 5 | 5 | 4 |
| Crack propagation resistance of crossing belt layers (index) | | 1,247 | 50 | 1,263 | 1,263 | 1,263 |

[Table 5]

|  |  | Example 9 | Example 10 | Example 11 | Example 12 | Example 13 |
|---|---|---|---|---|---|---|
| Outermost belt layer | Cord type | B | B | B | B | B |
|  | Cord diameter (mm) | 1.6 | 1.6 | 1.6 | 1.6 | 1.6 |
|  | Cord to cord distance, G1 (mm) | 0.00 | 2.06 | 1.88 | 0.02 | 0.00 |
|  | End count (cords/50 mm) | 31 | 14 | 14 | 31 | 31 |
|  | SC amount* in calendered steel | 50 | 22 | 23 | 49 | 50 |
| Crossing belt layers | Cord type | B | B | B | B | B |
|  | Cord diameter (mm) | 1.6 | 1.6 | 1.6 | 1.6 | 1.6 |
|  | Cord to cord distance, G2 (mm) | 0.67 | 1.88 | 1.88 | 1.88 | 1.88 |
|  | End count (cords/50 mm) | 22 | 14 | 14 | 14 | 14 |
|  | SC amount* in calendered steel | 35 | 23 | 23 | 23 | 23 |
| SC amount in outermost layer/SC amount in crossing layers $\times$ 100(%) | | 142 | 95 | 100 | 215 | 217 |
| G1/G2 | | 0.00 | 1.10 | 1.00 | 0.01 | 0.00 |
| Cutting resistance (index) | | 202 | 100 | 125 | 190 | 191 |
| Irregular wear resistance (index) | | 4 | 5 | 5 | 4 | 4 |
| Crack propagation resistance of crossing belt layers (index) | | 1,263 | 1,252 | 1,252 | 1,252 | 1,252 |

[Table 6]

| | | Example 14 | Example 15 | Example 16 | Example 17 | Example 18 | Example 19 |
|---|---|---|---|---|---|---|---|
| Outermost belt layer | Cord type | C | C | C | C | B | B |
| | Cord diameter (mm) | 2.2 | 2.2 | 2.2 | 2.2 | 1.6 | 1.6 |
| | Cord to cord distance, G1 (mm) | 0.09 | 0.10 | 1.80 | 1.81 | 0.32 | 0.32 |
| | End count (cords/ 50 mm) | 22 | 22 | 13 | 12 | 26 | 26 |
| | SC amount* in calendered steel | 48 | 48 | 28 | 27 | 42 | 42 |
| Crossing belt layers | Cord type | B | B | B | B | B | B |
| | Cord diameter (mm) | 1.60 | 1.60 | 1.60 | 1.60 | 1.6 | 1.6 |
| | Cord to cord distance, G2 (mm) | 0.23 | 0.23 | 0.23 | 0.23 | 0.32 | 0.31 |
| | End count (cords/ 50 mm) | 27 | 27 | 27 | 27 | 26 | 26 |
| | SC amount* in calendered steel | 44 | 44 | 44 | 44 | 42 | 42 |
| SC amount in outermost layer/SC amount in crossing layers $\times$ 100(%) | | 110 | 109 | 63 | 63 | 100 | 99 |
| G1/G2 | | 0.40 | 0.44 | 7.93 | 7.98 | 1.00 | 1.050 |
| Cutting resistance (index) | | 232 | 231 | 150 | 149 | 179 | 179 |
| Irregular wear resistance (index) | | 4 | 5 | 5 | 5 | 5 | 5 |
| Crack propagation resistance of crossing belt layers (index) | | 1,252 | 1,252 | 1,252 | 1,252 | 1,255 | 1,156 |

From Tables 2 to 6 above, it is seen that, in the tires according to the present invention, excellent cutting resistance and excellent crack propagation resistance of the crossing belt layers were attained while suppressing irregular wear.

DESCRIPTION OF SYMBOLS

1:      core filament

2:      sheath filament

11:      core

12:      sheath

20:      steel cord

100:      pneumatic tire

101:    bead core

102:    carcass

103:    belt layer

104:    tread portion

105:    side wall portion

106:    bead portion

**Claims**

1.  A pneumatic tire (100) comprising: a belt composed of at least three belt layers (103) on the tire radial-direction outer side of a carcass (102), the at least three belt layers (103) comprising two crossing belt layers (103) that are inclined in the opposite directions across the tire equatorial plane,
    wherein a reinforcing material of the crossing belt layers (103) is a steel cord (20) which has a layer-twisted structure comprising a core (11) composed of two core filaments (1) and a sheath (12) composed of eight sheath filaments (2) that are twisted together around the core (11),
    the two core filaments (1) have a circular cross section and are twisted together, and
    a steel cord (20) amount in the crossing belt layers (103), which is represented by the following Equation (1), is 23 to 49:

    $$\text{Steel cord diameter (mm)} \times \text{Steel cord end count (steel cords/50 mm)} \quad (1),$$

    **characterised in that**:
    the twisting direction of the core filaments (1) is different from the twisting direction of the sheath filaments (2).

2.  The pneumatic tire (100) according to claim 1, wherein an outermost belt layer (103) among the at least three belt layers (103) has a steel cord (20) amount of 37 to 49, and the steel cord (20) amount in the crossing belt layers (103) is not greater than the steel cord (20) amount in the outermost belt layer (103).

3.  The pneumatic tire (100) according to claim 2, wherein the steel cord (20) amount in the outermost belt layer (103) is 100 to 217% of the steel cord (20) amount in the crossing belt layers (103).

4.  The pneumatic tire (100) according to claim 2 or 3, wherein a steel cord (20) to cord distance G1 (mm) of the outermost belt layer (103) and a steel cord (20) to cord distance G2 (mm) of the crossing belt layers (103) satisfy a relationship represented by the following Equation (2):

    $$0.1 \leq G1 \leq G2 \leq 1.8 \quad (2).$$

5.  The pneumatic tire (100) according to any one of claims 2 to 4, wherein the steel cord (20) to cord distance G1 (mm) of the outermost belt layer (103) and the steel cord (20) to cord distance G2 (mm) of the crossing belt layers (103) satisfy a relationship represented by the following Equation (3):

    $$0.05 \leq G1/G2 < 1.0 \quad (3).$$

6.  The pneumatic tire (100) according to any one of claims 1 to 5, wherein a diameter Dc of the core filaments (1) and a diameter Ds of the sheath filaments (2) satisfy a relationship represented by the following Equation (4):

    $$0.90 \leq Ds/Dc \leq 1.10 \quad (4).$$

**7.** The pneumatic tire (100) according to any one of claims 1 to 6, wherein the diameter Dc of the core filaments (1) and the diameter Ds of the sheath filaments (2) are the same.

**8.** The pneumatic tire (100) according to any one of claims 1 to 7, wherein the diameter Dc of the core filaments (1) and the diameter Ds of the sheath filaments (2) are both 0.30 to 0.55 mm.

**9.** The pneumatic tire (100) according to any one of claims 1 to 8, wherein a twisting pitch of the core filaments (1) is 5 to 15 mm.

**10.** The pneumatic tire (100) according to any one of claims 1 to 9, wherein a twisting pitch of the sheath filaments (2) is 9 to 30 mm.

**Patentansprüche**

**1.** Luftreifen (100), der Folgendes umfasst: einen Gürtel, der aus wenigstens drei Gürtellagen (103) auf der in Reifenradialrichtung äußeren Seite einer Karkasse (102) besteht, wobei die wenigstens drei Gürtellagen (103) zwei sich kreuzende Gürtellagen (103) umfassen, die in entgegengesetzten Richtungen über die Reifenäquatorialebene geneigt sind,
wobei ein Verstärkungsmaterial der Gürtellagen (103) ein Stahlkord (20) ist, der eine lagengedrillte Struktur aufweist, die einen Kern (11), der aus zwei Kernfilamenten (1) besteht, und einen Mantel (12), der aus acht Mantelfilamenten (2), die um den Kern (11) miteinander verdrillt sind, besteht, umfasst,
die zwei Kernfilamente (1) einen kreisförmigen Querschnitt aufweisen und verdrillt sind und
eine Menge an Stahlkord (20) in den Gürtellagen (103), die durch die folgende Gleichung (1) dargestellt wird, 23 bis 49 beträgt:

$$\text{Stahlkord-Durchmesser (mm)} \times \text{Stahlkord-Endenzahl (Stahlkords/50 mm)} \quad (1),$$

**dadurch gekennzeichnet, dass**:
sich die Verdrillungsrichtung der Kernfilamente (1) von der Verdrillungsrichtung der Mantelfilamente (2) unterscheidet.

**2.** Luftreifen (100) nach Anspruch 1, wobei eine äußerste Gürtellage (103) unter den wenigstens drei Gürtellagen (103) eine Menge an Stahlkord (20) von 37 bis 49 aufweist und die Menge an Stahlkord (20) in den sich kreuzenden Gürtellagen (103) nicht größer ist als die Menge an Stahlkord (20) in der äußersten Gürtellage (103).

**3.** Luftreifen (100) nach Anspruch 2, wobei die Menge an Stahlkord (20) in der äußersten Gürtellage (103) 100 bis 217 % der Menge an Stahlkord (20) in den sich kreuzenden Gürtellagen (103) beträgt.

**4.** Luftreifen (100) nach Anspruch 2 oder 3, wobei eine Entfernung G1 (mm) von Stahlkord (20) zu Kord der äußersten Gürtellage (103) und eine Entfernung G2 (mm) von Stahlkord (20) zu Kord der sich kreuzenden Gürtellagen (103) eine Beziehung erfüllen, die durch die folgende Gleichung (2) dargestellt wird:

$$0{,}1 \leq G1 \leq G2 \leq 1{,}8 \quad (2).$$

**5.** Luftreifen (100) nach einem der Ansprüche 2 bis 4, wobei die Entfernung G1 (mm) von Stahlkord (20) zu Kord der äußersten Gürtellage (103) und die Entfernung G2 (mm) von Stahlkord (20) zu Kord der sich kreuzenden Gürtellagen (103) eine Beziehung erfüllen, die durch die folgende Gleichung (3) dargestellt wird:

$$0{,}05 \leq G1/G2 < 1{,}0 \quad (3).$$

**6.** Luftreifen (100) nach einem der Ansprüche 1 bis 5, wobei ein Durchmesser Dc der Kernfilamente (1) und ein Durchmesser Ds der Mantelfilamente (2) eine Beziehung erfüllen, die durch die folgende Gleichung (4) dargestellt wird:

$$0{,}90 \leq Ds/Dc < 1{,}10 \quad (4).$$

**7.** Luftreifen (100) nach einem der Ansprüche 1 bis 6, wobei der Durchmesser Dc der Kernfilamente (1) und der Durchmesser Ds der Mantelfilamente (2) gleich sind.

**8.** Luftreifen (100) nach einem der Ansprüche 1 bis 7, wobei der Durchmesser Dc der Kernfilamente (1) und der Durchmesser Ds der Mantelfilamente (2) beide 0,30 bis 0,55 mm betragen.

**9.** Luftreifen (100) nach einem der Ansprüche 1 bis 8, wobei eine Verdrillungsteilung der Kernfilamente (1) 5 bis 15 mm beträgt.

**10.** Luftreifen (100) nach einem der Ansprüche 1 bis 9, wobei eine Verdrillungsteilung der Mantelfilamente (2) 9 bis 30 mm beträgt.


**Revendications**

**1.** Bandage pneumatique (100), comprenant : une ceinture comprenant au moins trous couches de ceinture (103) sur le côté externe, dans la direction radiale du bandage pneumatique, d'une carcasse (102), les au moins trois couches de ceinture (103) comprenant deux couches de ceinture à croisement (103) inclinées dans la direction opposée à travers le plan équatorial du bandage pneumatique ;
lorsqu'un matériau de renforcement des couches de ceinture à croisement (103) est constitué par un câblé d'acier (20) comportant une structure à couches torsadées, comprenant une âme (11) composée de deux filaments d'âme (1), et une gaine (12) composée de huit filaments de gaine (2) torsadés ensemble autour de l'âme (11) ;
les deux filaments d'âme (1) ont une section transversale circulaire et sont torsadés ensemble ; et une quantité de câblés d'acier (20) dans les couches de ceinture à croisement (1023), représentée par l'équation ci-dessous (1), est comprise entre 23 et 49 :

diamètre des câblés d'acier (mm) x nombre de câblés d'acier (câblés d'acier/50 mm)     (1) ;

**caractérisé en ce que** :
la direction de torsion des filaments d'âme (1) est différente de la direction de torsion des filaments de gaine (2).

**2.** Bandage pneumatique (100) selon la revendication 1, dans lequel une couche de ceinture externe extrême (103), parmi les au moins trois couches de ceinture (103) comporte une quantité de câblés d'acier (20) comprise entre 37 et 49, la quantité de câblés d'acier dans les couches de ceinture à croisement (103) n'étant pas supérieure à la quantité de câblés d'acier (20) dans la couche de ceinture externe extrême (103).

**3.** Bandage pneumatique (100) selon la revendication 2, dans lequel la quantité de câblés d'acier (20) dans la couche de ceinture externe extrême (103) représente 100 à 217% de la quantité de câblés d'acier (20) dans les couches de ceinture à croisement (103).

**4.** Bandage pneumatique (100) selon les revendications 2 ou 3, dans lequel une distance (Gl) (mm) entre les câblés d'acier (20) de la couche de ceinture externe extrême(103) et la distance G2 (mm) entre les câblés des couches de ceinture à croisement (103) satisfont une relation représentée par l'équation (2) ci-dessous :

$$0{,}1 \leq G1 \leq G2 \leq 1{,}8 \quad (2).$$

**5.** Bandage pneumatique (100) selon l'une quelconque des revendications 2 à 4, dans lequel la distance G1 (mm) entre les câblés d'acier (20) de la couche de ceinture externe extrême (103) et la distance G2 (mm) entre les câblés d'acier des couches de ceinture à croisement (103) satisfont une relation représentée par l'équation (3) ci-dessous :

$$0{,}05 \leq G1/G2 < 1{,}0 \quad (3).$$

**6.** Bandage pneumatique (100) selon l'une quelconque des revendications 1 à 5, dans lequel un diamètre Dc des filaments d'âme (1) et un diamètre Ds des filaments de gaine (2) satisfont une relation représentée par l'équation (4) ci-dessous :

$$0,90 \leq \mathrm{Ds/Dc} \leq 1,10 \ (4).$$

**7.** Bandage pneumatique (100) selon l'une quelconque des revendications 1 à 6, dans lequel le diamètre Dc des filaments d'âme (1) et le diamètre Ds des filaments de gaine (2) sont identiques.

**8.** Bandage pneumatique (100) selon l'une quelconque des revendications 1 à 7, dans lequel le diamètre Dc des filaments d'âme (1) et le diamètre Ds des filaments de gaine (2) sont tous les deux compris entre 0,30 et 0,55 mm

**9.** Bandage pneumatique (100) selon l'une quelconque des revendications 1 à 8, dans lequel un pas de torsion des filaments d'âme (1) est compris entre 5 et 15 mm

**10.** Bandage pneumatique (100) selon l'une quelconque des revendications 1 à 9, dans lequel un pas de torsion des filaments de gaine (2) est compris entre 9 et 30 mm

FIG. 1

FIG. 2

FIG. 3 A

FIG. 3 B

FIG. 4 A

FIG. 4 B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0399795 A1
- JP H02306801 A